# EUROPEAN PATENT SPECIFICATION

(11) **EP 1 757 017 B1**
(45) Date of publication and mention of the grant of the patent: **07.11.2007**
(21) Application number: 05750305.4
(22) Date of filing: 18.06.2005
(51) Int. Cl.: H04L 12/24, H04L 12/26

(54) **SYSTEM AND METHOD FOR CONNECTION PERFORMANCE ANALYSIS**
SYSTEM UND VERFAHREN ZUR ANALYSE DER VERBINDUNGSLEISTUNG
SYSTEME ET PROCEDE D'ANALYSE DES PERFORMANCES D'UNE CONNEXION

(30) Priority: 18.06.2004 US 580871 P
(43) Date of publication of application: 28.02.2007
(73) Proprietor: ADVA AG Optical Networking, 82152 Martinsried (DE)
(72) Inventor: WEEKS, John, Kevin, Richardson, TX 75082 (US); JAMIESON, Ross, Alexander, Plano, TX 75023 (US); TREHAN, Vikas, Allen, Texas 75013 (US); SANKEY, Wayne, Robert, Plano, TX 75025 (US); BLETTNER, Doug, Dallas, TX 75231 (US); MEZEUL, Michael, J., Allen, TX 75002 (US)
(74) Representative: Reinhard - Skuhra - Weise & Partner
(86) International application number: PCT/IB2005/001715
(87) International publication number: WO 2005/125100

(56) References cited:
- EP-A- 0 777 401
- US-A- 5 793 976
- SANGHI D ET AL: "Experimental assessment of end-to-end behavior on Internet" NETWORKING : FOUNDATION FOR THE FUTURE. SAN FRANCISCO, MAR. 28 - APR. 1, 1993, PROCEEDINGS OF THE ANNUAL JOINT CONFERENCE OF THE COMPUTER AND COMMUNICATIONS SOCIETIES (INFOCOM), LOS ALAMITOS, IEEE COMP. SOC. PRESS, US, vol. VOL. 2 CONF. 12, 28 March 1993 (1993-03-28), pages 867-874, XP010032228 ISBN: 0-8186-3580-0
- MATHIS M: "Windowed ping: an IP layer performance diagnostic" COMPUTER NETWORKS AND ISDN SYSTEMS, NORTH HOLLAND PUBLISHING. AMSTERDAM, NL, vol. 27, no. 3, December 1994 (1994-12), pages 449-459, XP004037978 ISSN: 0169-7552

## Description

### BACKGROUND

In a communications network, a final step in establishing a circuit (e.g., a virtual circuit such as an Ethernet Virtual Circuit) often includes a testing process to verify the service integrity and performance characteristics of the circuit. In-service testing may also be performed to ensure that a previously established circuit is operating as desired. Such testing generally requires a service provider to connect external test equipment to both ends of the circuit to verify the circuit's service integrity and performance characteristics. The purpose of the test equipment is to verify that all intermediate switching points in the network are properly configured and that the circuit operates as specified under various traffic conditions and loads. This is a time-consuming and labor and resource-intensive task.

Some systems use a centralized test head included in a network management node (i.e., within the network connecting the two ends of the circuit). Such a centralized test head may, for example, send frames to each end of the circuit separately for testing purposes. However, the end-to-end connection between the two ends is not tested because the frames are originated and terminated on the centralized test head and only pass through one segment of the connection at a time. Accordingly, if one end of the circuit fails the testing, it may be because of problems in the test head itself or problems between the test head and the endpoint being tested. Therefore, current centralized test heads do not provide satisfactory remote testing capabilities.

Accordingly, an improved system and method for performing connection performance analysis in a network environment are desired.

### BRIEF DESCRIPTION OF THE DRAWINGS

Fig. 1 illustrates a conventional system using two test sets for verifying a service connection.
Fig. 2 illustrates the system of Fig. 1 utilizing one embodiment of embedded connection performance analysis functionality for end-to-end verification of the service connection.
Fig. 3 is a flow chart of one embodiment of a method for performing the connection performance analysis within the system of Fig. 2.
Fig. 4 illustrates a conventional system using three test sets for verifying point-to-multipoint service connections.
Fig. 5 illustrates the system of Fig. 4 utilizing one embodiment of embedded connection performance analysis functionality for end-to-end verification of one or more of the service connections.
Fig. 6 is a block diagram of one embodiment of a service demarcation point having connection performance analyzer capabilities.
Fig. 7 is a block diagram illustrating one embodiment of the connection performance analyzer of the service demarcation point of Fig. 6 as a functional block in a service card.
Fig. 8 is a block diagram illustrating the flow of test traffic through a connection established between two of the service cards of Fig. 7.
Fig. 9a is a flow chart of one embodiment of a method for verifying the connection of Fig. 8 from the perspective of the service card that originates the test traffic.
Fig. 9b is a flow chart of one embodiment of a method for verifying the connection of Fig. 8 from the perspective of the service card that is at the opposite end of the connection from the originating service card of Fig. 9a.
Fig. 10 is a block diagram illustrating the flow of test traffic in a point-to-multipoint environment with the service cards of Fig. 7.
Fig. 11 is a block diagram illustrating one embodiment of functional components within a connection performance analyzer in a service demarcation point.
Fig. 12 is a block diagram of a test traffic injector that may be used in the connection performance analyzer of Fig. 11.
Fig. 13 is a block diagram of a test traffic monitor that may be used in the connection performance analyzer of Fig. 11.

### WRITTEN DESCRIPTION

The present disclosure relates generally to communication services and, more specifically, to a system and method for connection verification and performance analysis. It is understood, however, that the following disclosure provides many different embodiments or examples. Specific examples of components and arrangements are described below to simplify the present disclosure. These are, of course, merely examples and are not intended to be limiting. In addition, the present disclosure may repeat reference numerals and/or letters in the various examples. This repetition is for the purpose of simplicity and clarity and does not in itself dictate a relationship between the various embodiments and/or configurations discussed.

The following description uses an Ethernet environment as an example environment and therefore uses Ethernet terminology (e.g., frames). However, it is understood that the methods and systems disclosed herein may be used in other environments, such as those utilizing MultiProtocol Label Switching (MPLS), Internet Protocol (IP), Asynchronous Transfer Mode (ATM), and other technologies based on a protocol data unit (PDU) model. Accordingly, although the term "frame" is used extensively herein for purposes of example, it is understood that other PDUs (e.g., MPLS/IP packets) may be substituted for the term "frame" and alterations made to the Ethernet specific exemplary methods and systems for purposes of compatibility with the particular PDU model. In addition, it is understood that encapsulation (e.g., IP/AAL5/ATM) may be used with the methods and systems discussed herein.

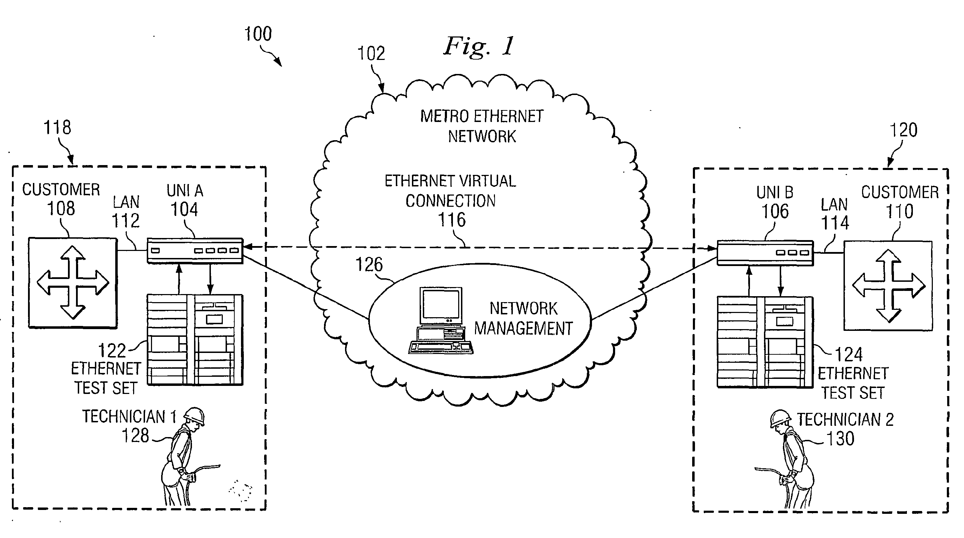

Referring to Fig. 1, an exemplary environment 100 includes a network (e.g., a Metro Ethernet Network (MEN)) 102, two service demarcation points UNI A and UNI B (contained within the provider equipment 104 and 106, respectively) and customer equipment 108, 110 coupled to the provider equipment 104 and 106, respectively, via local area networks (LANs) 112, 114. The MEN 102 is a service provider network that provides Ethernet frame transport services between customer Ethernet ports. Each of the UNIs A and B is a standard Ethernet interface that is the point of demarcation between the customer equipment 108, 110 and the MEN 102.

A connection (e.g., an Ethernet Virtual Connection (EVC)) 116 couples the provider equipment 104 and 106 (and their corresponding UNIs A and B) via the MEN 102. The EVC of the present example is defined by the Metro Ethernet Forum (MEF) as an association of two or more UNIs. An EVC connects two or more subscriber sites 118 and 120 and enables the transfer of Ethernet service frames between them, and prevents data transfer between subscriber sites that are not part of the same EVC. In the present example, each subscriber site 118 and 120 includes provider equipment and customer equipment coupled by a LAN. For purposes of convenience, the terms "service demarcation point" and "UNI" may be used interchangeably in certain examples, and it is understood that a UNI is contained in provider equipment that is positioned in the network as a service demarcation point. It is also understood that the UNI may represent other service demarcation points, such as a network-to-network interface (NNI).

When establishing an EVC from UNI A to UNI B across the MEN 102, it is often necessary for the MEN provider (not shown) to connect external test equipment 122 and 124 to each end of the circuit to verify the circuit's service integrity and performance characteristics. The purpose of the test equipment 122 and 124 is to verify that all intermediate switching points in the MEN 102 are properly configured and that the EVC 116 operates properly under various traffic conditions and loads. This is a time-consuming and labor and resource-intensive task.

Generally, when creating an Ethernet point-to-point service connection (e.g., the EVC 116), the MEN operator first identifies which physical ports on the provider equipment 104 and 106 are to participate in the EVC 116 between UNIs A and B. The operator then configures the provider equipment 104 and 106 (e.g., on both ends) and all intermediate equipment in the MEN 102 to establish the EVC 116 using the assigned ports. In some systems, the identification and configuration may be accomplished from a central network management node 126 (e.g., a terminal) by a single operator.

If the network operator is to offer a guaranteed level of service to an end subscriber (e.g., a user of the customer equipment 108 or 110), the operator should verify that the EVC configuration is correct across the network between the two sites 118 and 120. To accomplish this, the network operator should verify the service connection and its performance parameters from end-to-end before declaring the EVC "fit for use." The verification entails the deployment of one or more network technicians 128 and/or 130 to the customer sites 118 and 120 with the Ethernet test equipment 122 and 124. The technicians 128 and 130 connect the test equipment 122 and 124 to the assigned physical ports on both ends of the EVC 116 and proceed to verify the performance and integrity of the EVC under various operating conditions. After the network technicians and operator are satisfied that the connection is functioning properly, the EVC and its associated service is turned over to the subscriber.

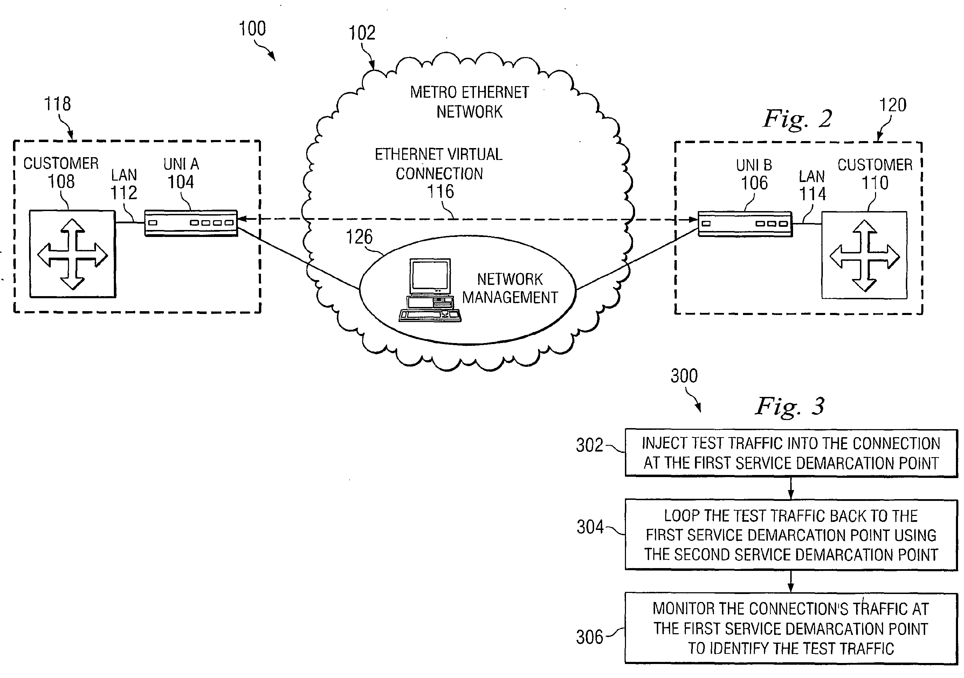

Referring to Fig. 2, in one embodiment, the system of Fig. 1 is illustrated with the addition of functionality provided by a connection performance analyzer (CPA) (not shown) positioned within the provider equipment 104 and 106. As will be described later in greater detail, each CPA may be implemented as part of a service demarcation point (e.g., as a service card within the provider equipment). The CPAs enable end-to-end (UNI-to-UNI) testing of the EVC 116 without the need for the testing equipment and technicians described with respect to Fig. 1. It is understood that the implementation of a CPA within a service card is for purposes of convenience only, and that the CPA may be implemented in any portion of the provider equipment.

The CPA functionality may be used to execute a custom or predefined series of tests, such as those detailed in RFC 2544 (entitled "Benchmarking Methodology for Network Interconnect Devices") from any UNI point in a network that has the CPA functionality. Furthermore, the testing may be controlled remotely from the network management node 126. For example, the management node may use management tunnels (that use VLAN tags, MAC addresses, etc.) and TL1 commands such as OPR-LPBK-E100:<tid>:<aid>:<ctag>; RLS-LPBK-E100:<tid>:<aid>:<ctag>; and TEST-E100:<tid>:<aid>:<ctag>: One example of a system and method for providing such management capabilities is described in U.S. Patent Application Serial No. 10/369,411, filed on February 18, 2003, and entitled "Single-Ended Ethernet Management System and Method," which is incorporated herein by reference in its entirety.

With additional reference to Fig. 3, a method 300 illustrates one embodiment of a process that may be used to test the EVC 116 of Fig. 2. For purposes of example, the UNI B is the originating UNI and the UNI A is the destination UNI. In step 302, the originating UNI B injects test traffic into the EVC 116. In step 304, UNI A loops the test traffic back to the UNI B. In step 306, the UNI B monitors the EVC's traffic to identify the test traffic, which may then be analyzed. It is understood that the various steps may occur simultaneously, with test traffic being injected, looped back, and monitored in an ongoing process. The duration of such a test may be defined as desired (e.g., number of frames generated, defined time period, manual start/stop, or until certain test values are received).

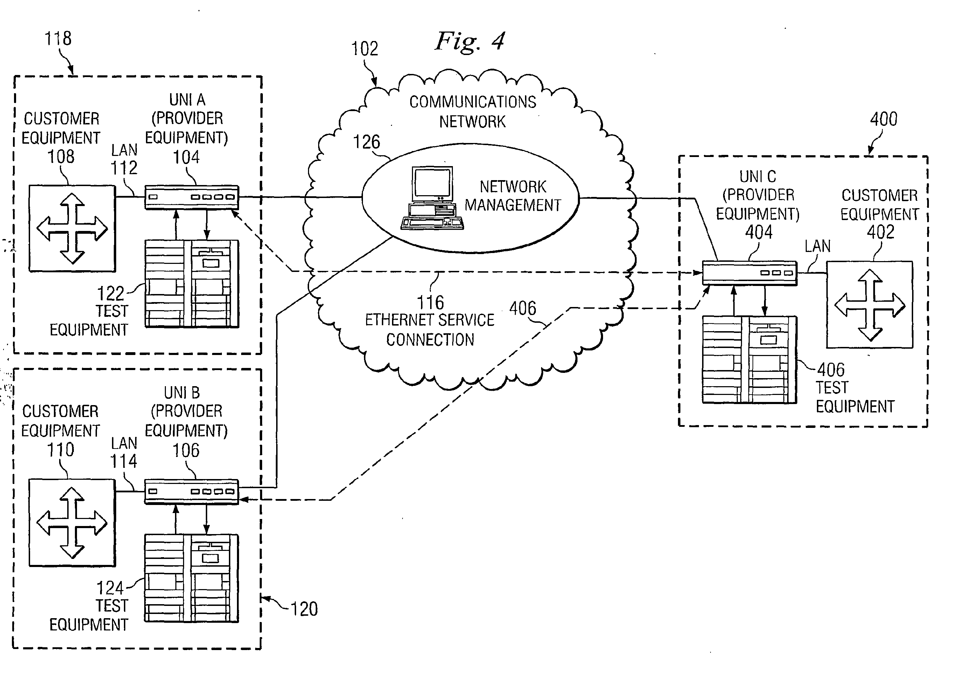

Referring to Fig. 4, the system 100 of Fig. 1 is illustrated with an additional site 400 coupled in a point to multi-point relationship with the sites 118 and 120. In simple point-to-point EVC topologies (such as that of Fig. 1), service verification can be performed at both ends of the EVC without disrupting existing traffic. However, service verification becomes more complicated when deploying point to multi-point EVCs. It is understood that this problem can also be extrapolated to a multi-point to multi-point case (not shown). In the present example, the UNI of site 400 is acting as an aggregation point for EVCs from multiple other UNIs (e.g., the UNIs A and B from sites 118 and 120, respectively). Traffic from UNI A and UNI-B is aggregated at UNI C (provider equipment 404) and presented to the customer equipment 402 over a single Ethernet. An example of this application is the case of an Internet Service Provider (ISP), where the subscriber at UNI C is an ISP that is collecting traffic from multiple customers (UNIs A and B).

In this scenario, the single Ethernet port at UNI-C has multiple EVCs 116 and 406 terminated on it. Each individual EVC to UNIs A and B is established in the same manner as the point-to-point EVC described earlier with respect to Fig 1. However, the difficulty lies in testing each individual EVC 116 and 406 without disrupting traffic on the other EVCs already established on the multipoint UNI C, as disrupting traffic on UNI C whenever a new EVC is established to a new remote site is undesirable.

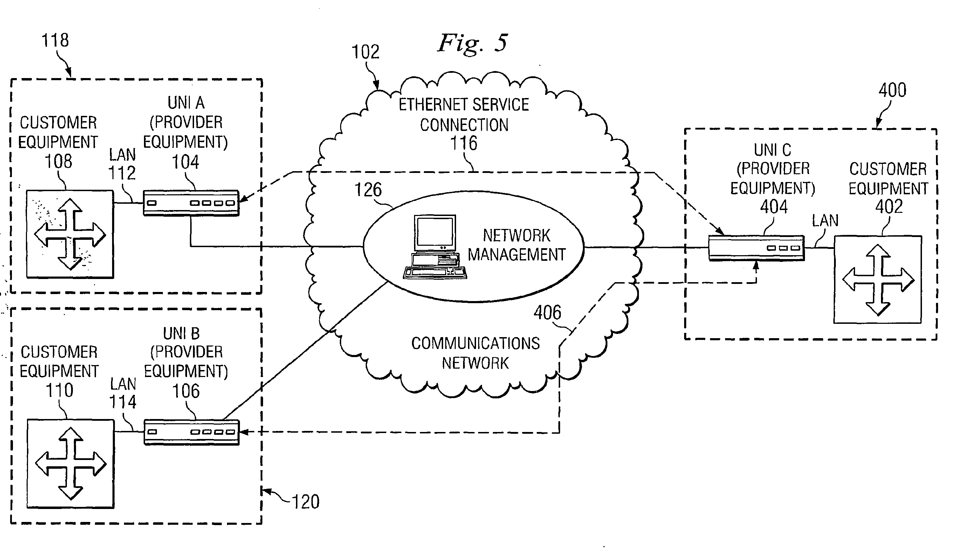

Referring to Fig. 5, in another embodiment, the system of Fig. 4 is illustrated with the addition of a CPA (not shown) positioned within the provider equipment 104, 106, and 404. The CPAs enable the EVCs 116 and 406 to be tested without the need for testing equipment and technicians at each UNI. In some embodiments, the testing may be controlled remotely from the network management node 126.

In the embodiments illustrated in Figs. 2 and 5, each CPA (e.g., an Etherjack® Connection Performance Analyzer (ECPA) available from Covaro Networks, Inc. of Richardson, Texas) may provide a subset of Ethernet test equipment functions embedded directly into the service demarcation point so that each individual Ethernet port can act as its own "test equipment." This allows the CPA to minimize or eliminate the need for external test equipment and may also allow EVC integrity and performance characterization to be performed by a single operator from a single (remote) management console. Such remote management may be accomplished by providing a management feature that allows for remote control from a network management terminal anywhere in the network.

The CPA may also provide a means to add and test new EVCs without disrupting existing services on a multi-service UNI, including service verification for new point-to-point EVCs on a multipoint Ethernet port without disrupting other "live" connections on the same port. Accordingly, the CPA allows a network operator to significantly reduce the operational expense (and time) of deploying Ethernet services. The CPA may also provide a port loopback on each Ethernet port that loops egress traffic back to the ingress path to enable end-to-end traffic testing.

As is described below, the CPA's functionality may be implemented by a combination of hardware and software components. For example, a hardware component may be used to insert Ethernet test frames into an EVC connection and to extract the Ethernet test frames received from the EVC connection. However, it is understood that various combinations of hardware and software may be used, and that functionality is attributed to hardware or software in the present embodiment for purposes of example only. The software and/or hardware may implemented in different ways, such as in a service card that is placed into provider equipment.

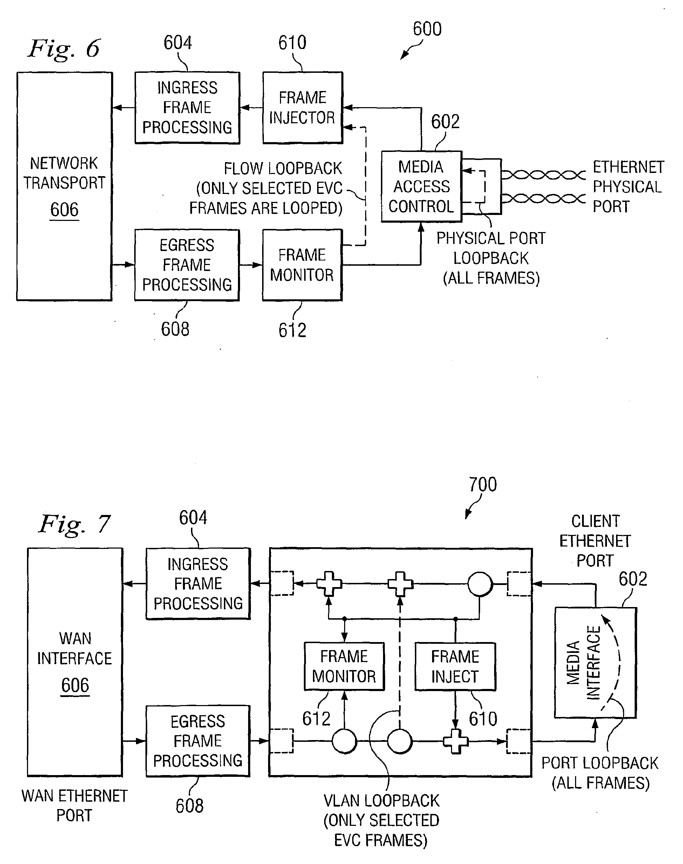

Referring to Fig. 6, a block diagram illustrates one embodiment of CPA components implemented within the data path of a service demarcation point 600. The service demarcation point 600 includes a media access control (MAC) block 602, an ingress frame processing block 604, a network transport block 606, and an egress frame processing block 608. The CPA functionality includes a test traffic injector 610 (e.g., a frame injector in the present Ethernet example) positioned in the ingress traffic data-path on the service card 600 and a traffic monitor 612 (e.g., a frame monitor in the present Ethernet example) positioned in the egress traffic data-path. By injecting test traffic into an EVC connection, looping the test traffic at the far end of the EVC connection, and monitoring the "echoed" traffic, the CPA is able to verify network connectivity along with various performance parameters. It is understood that the frame injector 610 and frame monitor 612 are configured for Ethernet in the present example, but may be readily adapted to MPLS, IP, and other PDU-based technologies.

Under normal circumstances, the frame injector 610 allows traffic from the MAC block 602 to pass through to the ingress frame processing block 604. Similarly, the frame monitor 612, in normal operation, passes frames transparently in the egress direction from the egress frame processing block 608 to the MAC block 602.

When placed in test mode, the frame injector 610 injects test traffic into the ingress or egress traffic flow (i.e., into the network or towards the subscriber). This test traffic emulates the flow of traffic from a UNI and allows various characteristics of the traffic to be simulated to ensure that the EVC connection performs correctly all the way through the network.

The frame monitor 612, when enabled, sniffs the egress traffic path for EVC test frames and traps them. The frame monitor 612 may then perform various performance calculations on the received traffic to generate performance results (e.g., received traffic rate, transmission delay, jitter, frame sequence reception, total number of received frames, and verification of 802.1p priority bits).

The frame injector 610 and frame monitor 612 may also implement a flow loopback path 614 that allows egress test traffic frames trapped in the frame monitor 612 to be "looped" back to the frame injector 610 for transmission back into the network. This flow loopback enables a single EVC test traffic flow to be looped back without affecting the egress flow of normal EVC traffic. This capability may be used, for example, in multi-service port testing.

Fig. 7 is a block diagram illustrating a more detailed embodiment of the service demarcation point of Fig. 6 with the CPA functionality implemented within a service card inserted into provider equipment. Although not necessary, implementing the CPA in a service card may aid in testing the provider equipment in which the service card is installed, as well as maximizing the amount of connection being tested. In the present example, the frame injector 610 is capable of sourcing three independent traffic flows (although it is understood that implementations sourcing more or fewer traffic flows may be provided), each with a different set of characteristics. Thus, it is possible to test EVC performance for multiple classes of traffic (for instance, with different priority levels) to ensure that different traffic classes receive the correct treatment. Similarly, the frame monitor 612 is capable of monitoring and analyzing three independent data flows in the present example. For example, there may be high priority, low latency traffic on the first flow, high priority, latency tolerant traffic on the second flow, and low priority, best effort traffic on the third flow. The three monitors observe each flow individually and then traffic flow characteristics of all three flows can be verified through the same service to ensure that high priority traffic does not interfere with low priority traffic. Multiple instances of frame injector and frame monitor components may exist to handle the various flows, as will be described later in greater detail.

The frame injector 610 is a hardware block that provides numerous parameters that may be configured by control software that executes on a separate processor module located in the same chassis. The frame injector 610 allows the control software to create each independent Ethernet traffic flow through the specification of one or more fields of an Ethernet frame. Exemplary fields include:
- Frame Control Header: a hardware label or header that is used internally by the service module to identify test frames;
- MAC source and destination addresses;
- Stacked VLAN header (optional);
- VLAN header (optional);
- Ethernet frame Length/Type fields: allow the software to specify the overall size of the frame to be generated;
- IP frame header (optional);
   o IPv4 (20 bytes)
   o IPv6 (40 bytes)
   o Enables software to specify an entire IP packet header to enable the setting to TOS/DSCP bits, IP addresses, etc., to allow testing of layer 3 devices in the network connection; and
- Payload pattern: allows software to specify either a fixed pattern to fill out the remaining payload in the Ethernet frame or the insertion of a pseudo-random pattern.

It is understood that the above fields are for purposes of example only, and that the illustrated fields and the designation of certain fields as optional may vary based on the specific implementation (e.g., a particular Ethernet implementation or the use of IP packets, pseudowire headers, or MPLS tags in other technologies, as well as the use of varying levels of encapsulation).

The frame injector 610 may also automatically calculate and insert the following fields into each test frame prior to transmission:
- Sequence Number: an incrementing number to verify frame ordering on receive.
- Timestamp: an internally generated time stamp indicating the number of clock cycles that have passed since the start of the test. This is used by the frame monitor 612 to calculate delay and latency parameters.
- Signature: an internally generated field used to confirm that the frame is a CPA test frame.
In the present example, these three fields are inserted into the test frame's payload.

Each traffic flow may also have a designated rate parameter that specifies the average bits per second transmission rate for the flow. A scheduling mechanism, such as a weighted round-robin scheduling mechanism, may be used to ensure that each flow receives the appropriate bandwidth when multiple flows are enabled. In the case of a single flow, weighted round-robin scheduling may be bypassed.

In some embodiments, upstream traffic (e.g., traffic directed from the MAC block 602 to the ingress frame processing block 604) matching the traffic being injected by the frame injector 610 may be identified and blocked. This prevents the upstream traffic from interfering with the injected test traffic stream.

The function of the frame monitor 612 is to monitor and terminate test frames received from the network. During normal operation, when monitoring is inactive, all frames pass transparently through the frame monitor 612 unchanged. As described previously, in the present example, the frame monitor 612, like the frame injector 610, supports up to three simultaneous, independent monitoring sessions to monitor up to three EVC traffic flows. Performance parameters may be calculated for each flow independently. Traffic passing through the frame monitor 612 may be discarded if it matches certain criteria.

When monitoring is enabled, all non-test frames (normal EVC traffic) continue to pass through the frame monitor 612 unchanged. All test frames, however, are trapped by the frame monitor 612 and are either terminated or looped back to the frame injector 610. The frame monitor 612 may determine various characteristics of some or all test frames, including CRC integrity, sequence ordering, delay and latency, delay distribution (minimum and maximum latency), and throughput (e.g., bits per second). Minimum and maximum latency values may be determined by the frame monitor 612. This supports the calculation of jitter performance on frame transmission.

When operating in flow loopback mode, the frame monitor 612 and frame injector 610 swap Source and Destination MAC addresses to ensure that the received test frame, when injected back into the network, can traverse any Ethernet switches in the network and successfully navigate back to the frame injector 610 that originally sourced the test frame.

In addition, IP address swapping/processing may be required when operating in flow loopback mode to ensure that loopback test frames can successfully navigate any routers or layer 3 switches that may be present in the EVC.

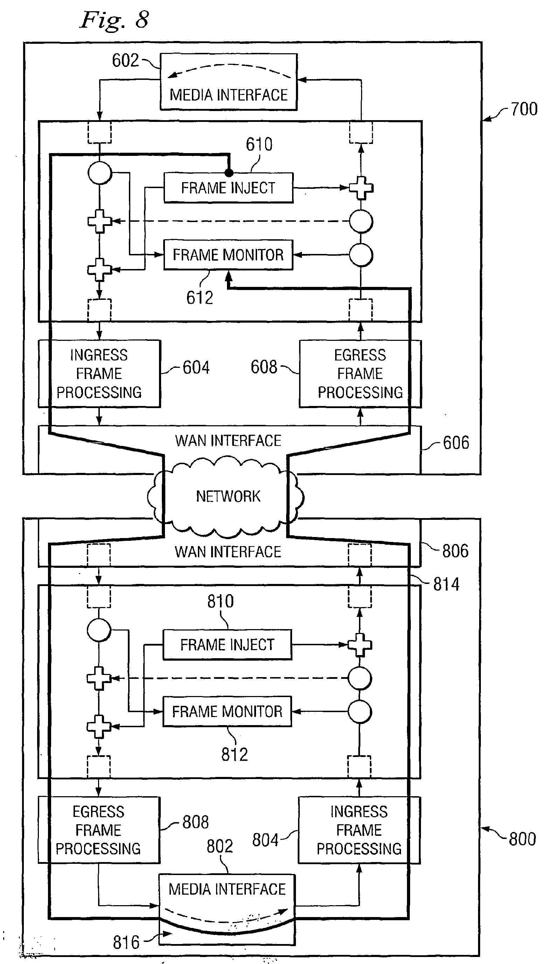

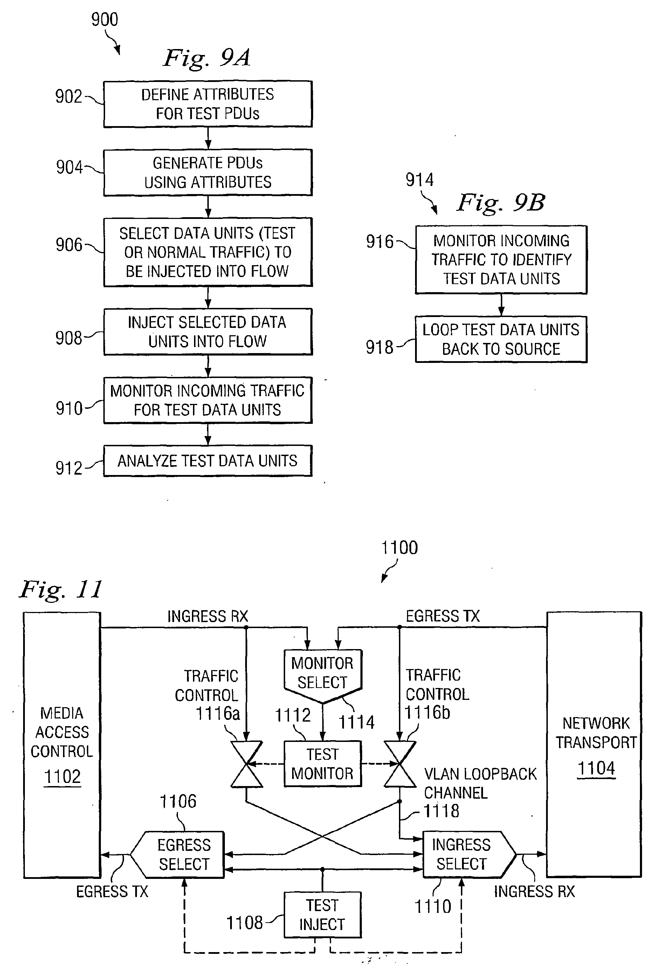

Referring to Fig. 8, a configuration of a typical point-to-point EVC service verification test is illustrated using the service card 700 of Fig. 7 (positioned within a UNI B) and an additional service card 800 (positioned within a UNI A) that is similar or identical to the service card 700. The service card 800 includes a MAC block 802, an ingress frame processing block 804, a network transport block 806, an egress frame processing block 808, a test traffic injector 810, and a traffic monitor 812. In the point-to-point EVC shown, the test traffic (which follows the path indicated by line 814) is injected by the frame injector 610 of the service card 700. Port loopback 816 (or flow loopback in some embodiments) may be utilized on the remote UNI B to return all traffic (including the test traffic) to the service card 700, and the frame monitor 612 of the service card 700 monitors the incoming traffic to detect the test traffic. One embodiment of this process is illustrated in greater detail in Figs. 9a and 9b.

With additional reference to Figs. 9a (a method 900 executed by the originating UNI B of Fig. 8) and 9b (a method 914 executed by the remote or destination UNI A), one embodiment of an end-to-end testing process is illustrated. In step 902, attributes are defined for the test traffic (e.g., for each PDU (frame in the present example)) and the frames are generated in step 904. Traffic to be injected into the flow (e.g., test traffic or normal traffic) is selected, as will be described later in greater detail, in step 906 and injected into the flow in step 908. In step 910, the CPA monitors incoming traffic for test traffic and analyzes the traffic for desired characteristics in step 912. On the opposite end of the connection, the CPA monitors the incoming traffic for test traffic in step 916 and loops the test traffic back to the originating CPA in step 918.

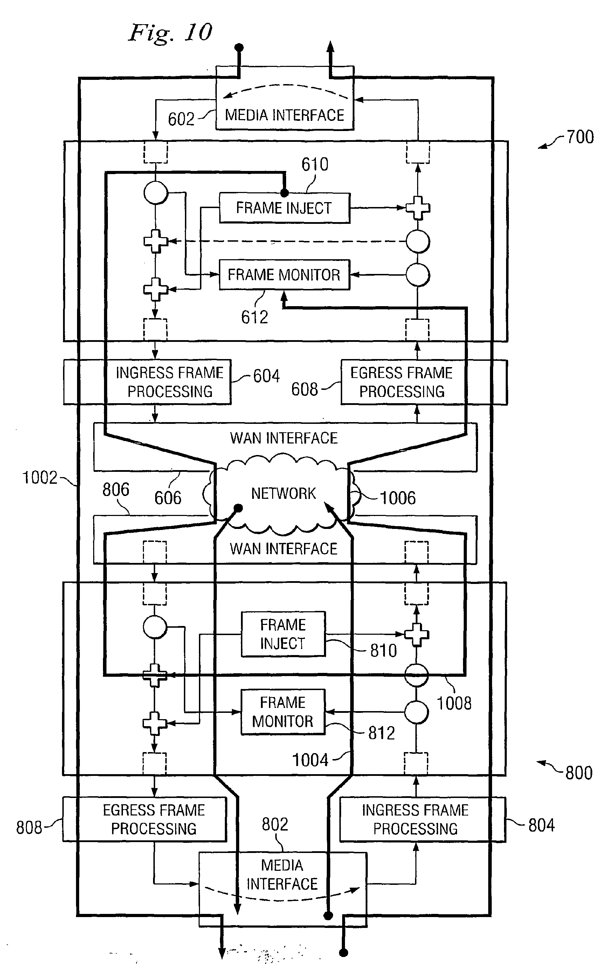

Referring to Fig. 10, a test being conducted on a multipoint UNI is illustrated with the service cards 700 (UNI B) and 800 (UNI A). Three separate EVCs 1002, 1004, and 1006 are illustrated. The EVC 1002 is between the UNIs A and B, the EVC 1004 is between the UNI A and another UNI (not shown), and the EVC 1006 (between the UNIs A and B) is for the test traffic that is injected into the network by the frame injector 610 of the service card 700. In the present example, flow loopback 1008 is used to loopback only the test traffic EVC 1006, while other EVC flows 1002 and 1004 continue unimpeded through the multipoint UNI A port. The frame monitor 612 of the service card 700 monitors the incoming traffic on the UNI B to detect the test traffic. It is also possible for EVC flows (such as the EVC flow 1002) to continue through UNI B without being affected by the EVC test flow 1006.

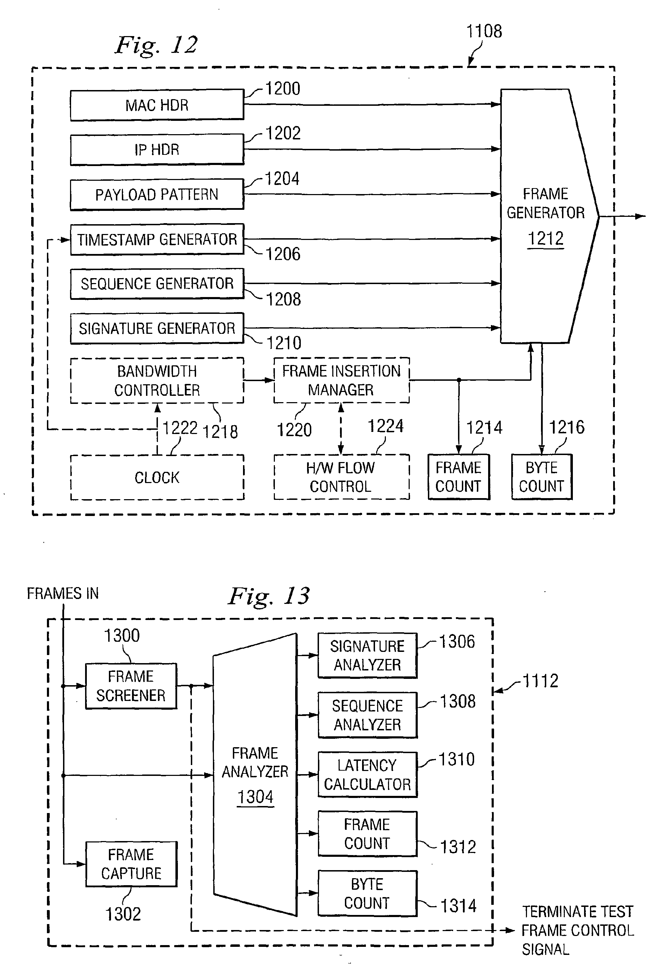

Referring to Fig. 11, a block diagram 1100 illustrates the interaction between various frame injector and frame monitor functions in one embodiment of a CPA. The frame injector and frame monitor functions are positioned between a MAC block 1102 and a network transport block 1104. The MAC block 1102 provides standard Ethernet Media Access Controller functionality, providing Ethernet MAC functions (e.g., per the IEEE-802.3 standard). The network transport block 1104 performs normal frame processing to control transmission to, and reception from, the network.

The remaining functional blocks of the diagram 1100 include an egress select block 1106, a test inject block 1108, an ingress select block 1110, a test monitor block 1112, a monitor select block 1114, and two traffic control blocks 1116a and 1116b. The egress select block 1106 selects the traffic frames that are transmitted to the subscriber, either test frames from the test inject block 1108 or normal frames from the network. The test inject block 1108 generates the test frames and is illustrated in greater detail in Fig. 12. The ingress select block 1110 selects traffic frames that are transmitted to the network, either test frames from the test inject block 1108, normal frames from the subscriber, or test frames that are being looped back into the network.

The test monitor block 1112 monitors test frames from the ingress or egress direction and performs analysis on the test traffic. This block is illustrated in greater detail in Fig. 13. The monitor select block 1114 is programmed to select test frames from either the ingress or egress traffic path and forward test frames to the test monitor block 1112. The two traffic control blocks 1116a and 1116b function as ON/OFF valves to allow frames to flow through or to terminate frames without sending them on. These blocks 1116a and 1116b may differentiate between normal traffic frames and test frames and may be configured to act independently with respect to each type of traffic. This enables test frames to be terminated, for example, while normal traffic frames are allowed to pass through. Fields such as the VLAN ID and/or signature fields may be used to differentiate between test frames and normal traffic frames.

A VLAN loopback channel 1118 provides a means for looping test frames received from the network back into the network. Loopback test frames may be identified by means of their VLAN value(s), signatures, and/or other identifiers. This function allows certain test frames to be looped back to a source point without disrupting any other live traffic flows on the same physical port.

With additional reference to Fig. 12, a functional block diagram illustrates one embodiment of the test inject block 1108 of Fig. 11. As previously described, the test inject block 1108 of the present example can generate up to three independent flows. Accordingly, there are three instances of the components illustrated in the diagram, with the exception of the blocks drawn with dashed lines, which are common control blocks across all three instances. For purposes of clarity, only the connections for one instance of the components are illustrated. The components that may have multiple instances include a MAC header (HDR) 1200, an IP HDR 1202, a payload pattern generator 1204, a timestamp generator 1206, a sequence generator 1208, a signature generator 1210, a frame generator 1212, a frame count 1214, and a byte count 1216. Components having only a single instance in the present example include a bandwidth controller 1218, a frame insertion manager 1220, a clock 1222, and a hardware flow control 1224.

The MAC HDR 1200 is programmable by software and contains the values for Ethernet MAC frame header fields, such as MAC Destination Address, Source Address, VLAN header, and Type/Length fields. These values are used when the test frame is created.

The IP HDR 1202 is programmable by software and contains values for fields in the IP packet header. This allows TOS/DSCP bits to be specified in the IP packet header to simulate IP headers that would be received from subscribers.

The payload pattern generator 1204 is responsible for generating data for the payload of the IP packet and MAC frame. In the present example, there are three software programmable data types: (1) a random pattern generated by this function, (2) a software specified pattern of limited length, which is duplicated and repeated by the payload pattern generator 1204 to fill the remaining payload, and (3) a complete payload content specification (that may be manually defined).

The timestamp generator 1206 is configured to place an internal timestamp in a portion of the payload each time a test frame is generated. The location of the timestamp may be proprietary. The timestamp is used by a Frame monitor function (e.g., the test monitor 1112 of Fig. 11) to determine latency and jitter associated with transmission of the test frame.

The sequence generator 1208 provides a unique, incrementing sequence number for each test frame generated for each flow. The sequence number is used by the frame monitor to look for proper packet ordering on receipt. The sequence generator 1208 maintains the sequence numbering for this test flow.

The signature generator 1210 generates a signature used to verify that the associated frame is a test frame. The signature generator 1210 may generate the signature in many different ways, including the use of a checksum, CRC, or a multi-input signature register (MISR).

The frame generator 1212 creates a test frame using data input from the various component contributors (1200-1210). It calculates the frame check sequence (FCS) value for the entire packet/frame and transmits the frame when signaled to do so by the frame insertion manager 1220.

The frame count 1214 maintains a count of the number of test frames that have been transmitted since the test was initiated by software. The value of the frame count is available to software at any point in time. The frame count 1214 may cooperate with the bandwidth controller 1218 to generate a finite number of test frames. Once this (optional) limit is reached, the bandwidth controller 1218 will not request that any further frames be generated until the test is reset by software. This allows a finite number of test frames to be sent.

The byte count 1216 keeps track of the number of bytes sent for the current test duration.

The bandwidth controller 1218 controls the bandwidth for each test flow. The bandwidth or rate of frame generation for a test flow is specified via software. This block uses the software specifications and clock ticks received from the hardware clock 1222 to determine how often to schedule and generate a test frame. Because each individual test flow can have its own rate of generation, the bandwidth controller coordinates between the three possible flows to ensure that each flow receives its proper bandwidth allocation.

The frame insertion manager 1220 is triggered by the bandwidth controller 1218 once the bandwidth controller has determined it is time to generate a frame for a flow. The frame insertion manager 1220 coordinates frame insertion using the internal hardware flow control 1224 to schedule the test frame transmission when an opportunity arises.

The clock 1222 represents the hardware clock ticks that are used to schedule the operation of the frame injector and to derive timestamps. It is understood that other scheduling methods may be used, including controlled methods.

The hardware flow control 1224 coordinates with the transport modules in the system to request a frame inject timeslice. When granted a transmit token, the hardware flow control 1224 notifies the frame insertion manager 1220 to trigger the transmission of the test frame.

With additional reference to Fig. 13, a functional block diagram illustrates one embodiment of the test monitor block 1112 of Fig. 11. As previously described, the test monitor block 1112 of the present example can monitor up to three independent flows, and there are three instances of the test monitor. The test monitor block 1112 includes a frame screener 1300, a frame capture function 1302, a frame analyzer 1304, a signature analyzer 1306, a sequence analyzer 1308, a latency calculator 1310, a frame count 1312, and a byte count 1314.

The frame screener 1300 calculates and verifies the FCS for the frame and screens all received frames with a valid FCS to identify test frames in the traffic flow. Test frames are identified using criteria programmed by software. This block also generates a control signal that determines whether the test frame is terminated or whether the test frame is allowed to continue downstream. This control signal may be used by one or both of the traffic control blocks 1116a and 1116b of Fig. 11 to terminate or pass the test frame.

The frame capture function 1302 captures and buffers one or more received test frames when a test is initiated. Software can then read the contents of this buffer to examine a frame's contents.

The frame analyzer 1304 uses information programmed by software to locate fields in the test frame that contain test specific data, such as the signature, originating timestamp, and sequence numbers. The signature, sequence, and timestamp numbers are passed to the signature analyzer 1306, sequence analyzer 1308, and latency calculator 1310.

The signature analyzer 1306 utilizes the signature embedded in the test frame to determine whether the frame is a test frame.

The sequence analyzer 1308 utilizes the sequence numbers embedded in the test traffic frames to look for missing and out-of-sequence frames. The sequence analyzer 1308 maintains a count of missing frames that is reported (e.g., to a user) when the test is completed. The sequence analyzer also scans for misordered frames and reports the number of out-of-sequence occurrences in the test results.

The latency calculator 1310 utilizes the timestamp information in the test frame to calculate the round-trip delay from when the frame was sent by the frame insertion manager 1220 (Fig. 12) to the time it was received back in the test monitor 1112. The latency calculator 1310 examines each received test frame during the testing period to calculate its latency and maintains three heuristics for the test iteration: (a) the minimum latency of all frames; (b) the maximum latency of all frames; and (c) the average latency observed over all frames. The latency calculator 1310 (and the timestamp generator 1206 of Fig. 12) use a clocking mechanism that provides latency measurements accurate to within a desired amount of time. For example, the counter may be a per-clock-tick counter running at frequencies on the order of 10 to 100 MHz to provide accuracy on the order of 10 to 100 ns, or .01 to 0.1 microseconds.

The frame count 1312 maintains a count of the test frames that have been received since the test was initiated. The byte count 1314 maintains a count of the number of test frame bytes that have been received since the test was initiated.

Although the PDU injector and monitor are described as being in a single service demarcation point, it is understood that a service demarcation point may contain only a monitor or an injector. For example, UNI A of Fig. 1 may contain only an injector and UNI B may contain only a monitor. In this uni-directional, end-to-end scenario, the injector of UNI A would inject test traffic into the EVC 116 as described previously, and the monitor of UNI B would monitor the test traffic. A management layer (located outside of UNI A and B, in one of the UNIs, or as a distributed platform) may be used to communicate with and control the injector and monitor.

Although the preceding examples are generally directed to testing whether a new connection is ready for use (e.g., meets predefined performance criteria), it is understood that the CPA functionally described herein may also be applied to in-service testing. For example, if a service provider desires to determine the performance characteristics of a previously established connection, the CPA functionality may be used. Flow-based loopback may be used to identify and test a particular EVC flow for in-service testing purposes. Accordingly, the present application should not be limited to any particular testing scenario, but may be applied to a connection at various points in the connection's existence.

While the invention has been particularly shown and described with reference to the preferred embodiment thereof, it will be understood by those skilled in the art that various changes in form and detail may be made therein without departing from the spirit and scope of the invention. Therefore, the claims should be interpreted in a broad manner, consistent with the present invention.

## Claims

1. A method for performing an end-to-end analysis of a connection coupling a first service demarcation point (104) of a first equipment and a second service demarcation point (106, 404) of a second equipment in a network, wherein each of the first and second service demarcation points includes a test traffic injector and a test traffic monitor, the method comprising:
injecting test traffic having more than one test frame into the connection using the test traffic injector of the first service demarcation point;
performing a loopback of the test traffic received by the second service demarcation point via the connection, wherein the loopback is performed by the second service demarcation point and returns the traffic to the first service demarcation point,
monitoring traffic received by the first service demarcation point via the connection to identify the looped back test traffic, wherein the monitoring is performed using the test traffic monitor of the first service demarcation point; and
**characterised in that** the loopback of the test traffic operates on a single traffic flow and prevents traffic associated with the connection from interfering with other traffic passing through the second service demarcation point.

2. The method of claim 1 further comprising assigning at least one attribute to each data unit in the test traffic.

3. The method of claim 1 further comprising analyzing the identified looped back test traffic to determine at least one performance characteristic.

4. The method of claim 1 further comprising performing a loopback of all traffic received by the second service demarcation point via the connection.

5. The method of claim 4 wherein the loopback of all traffic occurs on a per port basis.

6. The method of claim 1 further comprising filtering the test traffic received by the second service demarcation point via the connection, wherein the filtering identifies the test traffic to be looped back.

7. The method of claim 6 wherein the loopback of the test traffic occurs on a per flow basis and prevents traffic associated with the connection from interfering with other traffic passing through the second service demarcation point.

8. A connection performance analyzer configured for implementation in a service demarcation point of a network, the connection performance analyzer comprising:
a first test traffic injector located in a first equipment for injecting test traffic into a connection terminating on the service demarcation point;
a first test traffic monitor for identifying test traffic received from the connection; and
a first loopback path for looping test traffic originating at a second test traffic injector located in a second equipment at the opposite end of the connection back to a second test traffic monitor at the opposite end of the connection, wherein looping the test traffic occurs on a per flow basis and prevents traffic associated with the connection from interfering with other traffic passing through the second equipment.

9. The connection performance analyzer of claim 8 further comprising a second loopback path, wherein the first loopback path is configured to loop all traffic back to the second test monitor and the second loopback path is configured to loop.

10. A system for analyzing a virtual connection coupling a first service demarcation point (104) of a first equipment and a second service demarcation point (105, 404) of a second equipment in a network, the system comprising:
the first service demarcation point having a first test traffic injector for injecting test traffic into the virtual connection, a first test traffic monitor for monitoring test traffic received from the virtual connection, and a first loopback path for returning test traffic injected into the virtual connection by the second service demarcation point,
the second service demarcation point having a second test traffic injector for injecting test traffic into the virtual connection, a second test traffic monitor for monitoring test traffic received from the virtual connection, and a second loopback path for returning test traffic injected into the virtual connection by the first service demarcation point, wherein loopback of the test traffic injected by the first service demarcation point occurs on a per flow basis and prevents traffic associated with the connection from interfering with other traffic passing through the second service demarcation point; and
a network management node configured to communicate with the first and second service demarcation points to control an end-to-end test of the virtual connection
**characterised in that** loopback of the test traffic injected by the second service demarcation point operates on a single test traffic flow and prevents traffic associated with the connection from interfering with other traffic passing through the first service demarcation point.

11. The method of claim 1, wherein injecting test traffic comprises injecting test traffic having more than one independent traffic flow.

12. The method of claim 1, wherein injecting test traffic comprises injecting test traffic having more than one class of traffic.

13. The connection performance analyzer of claim 8, wherein the first test traffic injector is located in a first provider equipment, and the second test traffic injector is located in a second provider equipment.

14. The connection performance analyzer of claim 8, wherein the first and second test traffic injectors are located in the same provider equipment.

15. The connection performance analyzer of claim 8, wherein the first and second test traffic injectors are operable to inject test traffic having more than one independent traffic flow.

16. The connection performance analyzer of claim 8, wherein the first and second test traffic injectors are operable to inject test traffic having more than one class of traffic.

## Patentansprüche

1. Verfahren zum Durchführen einer Ende-zu-Ende-Analyse einer Verbindungskopplung eines ersten Dienstabgrenzungspunktes (104) eines ersten Gerätes und eines zweiten Dienstabgrenzungspunktes (106, 404) eines zweiten Gerätes in einem Netzwerk, wobei jeder der ersten und zweiten Dienstabgrenzungspunkte ein Testverkehr-Eingabeglied und ein Testverkehr-Überwachungsglied beinhaltet, wobei das Verfahren aufweist:
Eingeben eines Testverkehrs, welcher mehr als einen Testrahmen besitzt, in die Verbindung, wobei das Testverkehr-Eingabeglied des ersten Dienstabgrenzungspunktes benutzt wird;
Durchführen einer Rück- bzw. Prüfschleife des Testverkehrs, welcher durch den zweiten Dienstabgrenzungspunkt über die Verbindung empfangen wird, wobei die Rückschleife durch den zweiten Dienstabgrenzungspunkt durchgeführt wird und den Verkehr zu dem ersten Dienstabgrenzungspunkt zurückschickt, und
Überwachen des Verkehrs, welcher durch den ersten Dienstabgrenzungspunkt über die Verbindung empfangen wird, um den rückgeschleiften Testverkehr zu identifizieren, wobei das Überwachen durch das Benutzen des Testverkehr-Überwachungsgliedes des ersten Dienstabgrenzungspunktes durchgeführt wird,
**dadurch gekennzeichnet, dass** die Rückschleife des Testverkehrs als ein einzelner Testverkehrsstrom arbeitet und verhindert, dass der Verkehr, welcher mit der Verbindung verbunden ist, mit anderem Verkehr, welcher durch den zweiten Dienstabgrenzungspunkt läuft, zusammentrifft bzw. durch ihn gestört wird.

2. Verfahren nach Anspruch 1, welche ferner das Zuordnen wenigstens eines Attributes zu jeder Dateneinheit in dem Testverkehr aufweist.

3. Verfahren nach Anspruch 1, welches ferner das Analysieren des identifizierten rückgeschleiften Testverkehrs aufweist, um wenigstens eine Leistungsfähigkeitscharakteristik zu berechnen.

4. Verfahren nach Anspruch 1, welches ferner das Durchführen einer Rückschleife des gesamten Verkehrs, welcher durch den zweiten Dienstabgrenzungspunkt über die Verbindung empfangen wird, aufweist.

5. Verfahren nach Anspruch 4, wobei das Rückschleifen des gesamten Verkehrs auf einer Basis pro Anschluss abläuft.

6. Verfahren nach Anspruch 1, welches ferner das Filtern des Testverkehrs aufweist, welcher durch den zweiten Dienstabgrenzungspunkt über die Verbindung empfangen wird, wobei das Filtern den Testverkehr identifiziert, welcher rückzuschleifen ist.

7. Verfahren nach Anspruch 6, wobei das Rückschleifen des Testverkehrs auf einer Basis pro Strom bzw. Datenstrom auftritt und verhindert, dass der Verkehr, welcher zu der Verbindung gehört, mit anderem Verkehr, welcher durch den zweiten Dienstabgrenzungspunkt läuft, zusammentrifft bzw. durch ihn gestört wird.

8. Verbindungsleistungsfähigkeits-Analysierglied, welches für das Implementieren in einem Dienstabgrenzungspunkt eines Netzwerkes konfiguriert ist, wobei das Verbindungsleistungsfähigkeits-Analysierglied aufweist:
ein erstes Testverkehr-Eingabeglied, welches in einem ersten Gerät platziert ist, um den Testverkehr in eine Verbindung einzugeben, welche an dem Dienstabgrenzungspunkt endet;
ein erstes Testverkehr-Überwachungsglied, um den Testverkehr zu identifizieren, welcher von der Verbindung empfangen wird; und
einen ersten Rückschleifepfad, um den Testverkehr, welcher an einem zweiten Testverkehr-Eingabeglied seinen Ursprung hat, welches in einem zweiten Gerät auf dem gegenüberliegenden Ende der Verbindung platziert ist, zu einem zweiten Testverkehr-Überwachungsglied am gegenüberliegenden Ende der Verbindung zurückzuschleifen, wobei das Umlaufenlassen bzw. Schleifen des Testverkehrs auf einer Basis pro Datenstrom auftritt und verhindert, dass der Verkehr, welcher zu der Verbindung gehört, mit anderem Verkehr zusammentrifft bzw. durch diesen gestört wird, welcher durch das zweite Gerät läuft.

9. Verbindungsleistungsfähigkeits-Analysierglied nach Anspruch 8, welches ferner einen zweiten Rückschleifpfad aufweist, wobei der erste Rückschleifpfad konfiguriert ist, um den gesamten Verkehr zu dem zweiten Testüberwachungsglied rückzuschleifen, und der zweite Rückschleifpfad konfiguriert ist, eine Schleife auszuführen.

10. System zum Analysieren einer virtuellen Verbindung, welche einen ersten Dienstabgrenzungspunkt (104) eines ersten Gerätes und einen zweiten Dienstabgrenzungspunkt (105, 404) eines zweiten Gerätes in einem Netzwerk koppelt, wobei das System aufweist:
den ersten Dienstabgrenzungspunkt, welcher ein erstes Testverkehr-Eingabeglied zum Eingeben von Testverkehr in die virtuelle Verbindung, ein erstes Testverkehr-Überwachungsglied zum Überwachen des Testverkehrs, welcher von der virtuellen Verbindung empfangen wird, und einen ersten Rückschleifpfad besitzt, um den Testverkehr, welcher in die virtuelle Verbindung durch den zweiten Dienstabgrenzungspunkt eingegeben wurde, zurückzusenden,
den zweiten Dienstabgrenzungspunkt, welcher ein zweites Testverkehr-Eingabeglied zum Eingeben des Testverkehrs in die virtuelle Verbindung, ein zweites Testverkehr-Überwachungsglied zum Überwachen des Testverkehrs, welcher von der virtuellen Verbindung empfangen wird, und einen zweiten Rückschleifpfad besitzt, um den Testverkehr, welcher in die virtuelle Verbindung durch den ersten Dienstabgrenzungspunkt eingegeben wurde, zurückzusenden, wobei das Rückschleifen des Testverkehrs, welcher durch den ersten Dienstabgrenzungspunkt eingegeben wurde, auf einer Basis pro Datenstrom auftritt und verhindert, dass der Verkehr, welcher zu der Verbindung gehört, sich mit anderem Verkehr, welcher durch den zweiten Dienstabgrenzungspunkt läuft, überlagert bzw. durch diesen gestört wird; und
einen Netzwerk-Management-Knoten, welcher so aufgebaut ist, dass er mit dem ersten und dem zweiten Dienstabgrenzungspunkt kommuniziert, um einen Ende-zu-Ende-Test der virtuellen Verbindung zu steuern,
**dadurch gekennzeichnet, dass** das Rückschleifen des Testverkehrs, welcher durch den zweiten Dienstabgrenzungspunkt eingegeben wurde, auf einem einzelnen Testverkehrsstrom arbeitet und verhindert, dass der Verkehr, welcher zu der Verbindung gehört, sich mit anderem Verkehr, welcher durch den ersten Dienstabgrenzungspunkt läuft, zusammentrifft bzw. durch diesen gestört wird.

11. Verfahren nach Anspruch 1, in welchem der Eingabetestverkehr das Eingeben von Testverkehr aufweist, welcher mehr als einen unabhängigen Verkehrsstrom besitzt.

12. Verfahren nach Anspruch 1, in welchem das Eingeben des Testverkehrs das Eingeben von Testverkehr aufweist, welcher mehr als eine Klasse von Verkehr besitzt.

13. Verbindungsleistungsfähigkeits-Analysierglied nach Anspruch 8, in welchem das erste Testverkehr-Eingabeglied in einem ersten Provider- bzw. Anbietergerät und das zweite Testverkehr-Eingabeglied in einem zweiten Provider- bzw. Anbietergerät platziert ist.

14. Verbindungsleistungsfähigkeits-Analysierglied nach Anspruch 8, in welchem die ersten und zweiten Testverkehr-Eingabeglieder in dem gleichen Provider- bzw. Anbietergerät platziert sind.

15. Verbindungsleistungsfähigkeits-Analysierglied nach Anspruch 8, in welchem die ersten und zweiten Testverkehr-Eingabeglieder betreibbar bzw. funktionsfähig sind, um Eingabetestverkehr, welcher mehr als einen unabhängigen Verkehrsstrom besitzt, einzugeben.

16. Verbindungsleistungsfähigkeits-Analysierglied nach Anspruch 8, in welchem die ersten und zweiten Testverkehr-Eingabeglieder betreibbar bzw. funktionsfähig sind, um Testverkehr einzugeben, welcher mehr als eine Klasse von Verkehr besitzt.

## Revendications

1. Procédé d'exécution d'une analyse de bout en bout d'une connexion reliant un premier point de démarcation de service (104) d'un premier équipement et un second point de démarcation de service (106, 404) d'un second équipement dans un réseau, dans lequel chacun des premier et second points de démarcation de service comporte un injecteur de trafic de test et un dispositif de surveillance de trafic de test, le procédé comprenant :
l'injection d'un trafic de test ayant plus d'une trame de test dans la connexion au moyen de l'injecteur de trafic de test du premier point de démarcation de service ;
l'exécution d'un bouclage du trafic de test reçu par le second point de démarcation de service par l'intermédiaire de la connexion, dans lequel le bouclage est exécuté par le second point de démarcation de service et renvoie le trafic au premier point de démarcation de service, et
la surveillance du trafic reçu par le premier point de démarcation de service par l'intermédiaire de la connexion pour identifier le trafic de test bouclé, dans lequel la surveillance est exécutée au moyen du dispositif de surveillance de trafic de test du premier point de démarcation de service, **caractérisé en ce que** le bouclage du trafic de test opère sur un flux de trafic de test unique et empêche le trafic associé à la connexion d'interférer avec un autre trafic passant par le second point de démarcation de service.

2. Procédé selon la revendication 1, comprenant en outre l'assignation d'au moins un attribut à chaque unité de données dans le trafic de test.

3. Procédé selon la revendication 1, comprenant en outre l'analyse du trafic de test bouclé identifié afin de déterminer au moins une caractéristique de performance.

4. Procédé selon la revendication 1, comprenant en outre l'exécution d'un bouclage de tout le trafic reçu par le second point de démarcation de service par l'intermédiaire de la connexion.

5. Procédé selon la revendication 4, dans lequel le bouclage de tout le trafic se produit port par port.

6. Procédé selon la revendication 1, comprenant en outre le filtrage du trafic de test reçu par le second point de démarcation de service par l'intermédiaire de la connexion, dans lequel le filtrage identifie le trafic de test à boucler.

7. Procédé selon la revendication 6, dans lequel le bouclage du trafic de test se produit pour chaque flux et empêche le trafic associé à la connexion d'interférer avec un autre trafic passant par le second point de démarcation de service.

8. Analyseur de performance de connexion configuré pour être mis en oeuvre dans un point de démarcation de service d'un réseau, l'analyseur de performance de connexion comprenant :
un premier injecteur de trafic de test situé dans un premier équipement pour injecter un trafic de test dans une connexion se terminant au point de démarcation de service ;
un premier dispositif de surveillance de trafic de test pour identifier un trafic de test reçu depuis la connexion ; et
un premier trajet de bouclage pour boucler le trafic de test lancé au niveau d'un second injecteur de trafic de test situé dans un second équipement à l'extrémité opposée de la connexion de retour vers un second dispositif de surveillance de trafic de test à l'extrémité opposée de la connexion, dans lequel le bouclage du trafic de test se produit pour chaque flux et empêche le trafic associé à la connexion d'interférer avec un autre trafic passant par le second équipement.

9. Analyseur de performance de connexion selon la revendication 8, comprenant en outre un second trajet de bouclage, dans lequel le premier trajet de bouclage est configuré pour boucler tout le trafic de retour vers le second dispositif de surveillance de test et le second trajet de bouclage est configuré pour boucler.

10. Système d'analyse d'une connexion virtuelle reliant un premier point de démarcation de service (104) d'un premier équipement et un second point de démarcation de service (106, 404) d'un second équipement dans un réseau, le système comprenant :
le premier point de démarcation de service ayant un premier injecteur de trafic de test pour injecter un trafic de test dans la connexion virtuelle, un premier dispositif de surveillance de trafic de test pour surveiller le trafic de test reçu depuis la connexion virtuelle, et un premier trajet de bouclage pour renvoyer le trafic de test injecté dans la connexion virtuelle par le second point de démarcation de service,
le second point de démarcation de service ayant un second injecteur de trafic de test pour injecter un trafic de test dans la connexion virtuelle, un second dispositif de surveillance de trafic de test pour surveiller le trafic de test reçu depuis la connexion virtuelle, et un second trajet de bouclage pour renvoyer le trafic de test injecté dans la connexion virtuelle par le premier point de démarcation de service, dans lequel le bouclage du trafic de test injecté par le premier point de démarcation de service se produit pour chaque flux et empêche le trafic associé à la connexion d'interférer avec un autre trafic passant par le second point de démarcation de service ; et
un noeud de gestion de réseau configuré pour communiquer avec les premier et second points de démarcation de service afin de commander un test de bout en bout de la connexion virtuelle, **caractérisé en ce que** le bouclage du trafic de test injecté par le second point de démarcation de service opère sur un flux de trafic de test unique et empêche le trafic associé à la connexion d'interférer avec un autre trafic passant par le premier point de démarcation de service.

11. Procédé selon la revendication 1, dans lequel l'injection du trafic de test comprend l'injection d'un trafic de test ayant plus d'un flux de trafic indépendant.

12. Procédé selon la revendication 1, dans lequel l'injection du trafic de test comprend l'injection d'un trafic de test ayant plus d'une classe de trafic.

13. Analyseur de performance de connexion selon la revendication 8, dans lequel le premier injecteur de trafic de test est situé dans un premier équipement de fournisseur et le second injecteur de trafic de test est situé dans un second équipement de fournisseur.

14. Analyseur de performance de connexion selon la revendication 8, dans lequel les premier et second injecteurs de trafic de test sont situés dans le même équipement de fournisseur.

15. Analyseur de performance de connexion selon la revendication 8, dans lequel les premier et second injecteurs de trafic de test sont exploitables pour injecter un trafic de test ayant plus d'un flux de trafic indépendant.

16. Analyseur de performance de connexion selon la revendication 8, dans lequel les premier et second injecteurs de trafic de test sont exploitables pour injecter un trafic de test ayant plus d'une classe de trafic.
